# EUROPÄISCHE PATENTSCHRIFT

(11) **EP 1 780 068 B1**
(45) Veröffentlichungstag und Bekanntmachung des Hinweises auf die Patenterteilung: **10.06.2009**
(21) Anmeldenummer: 06021556.3
(22) Anmeldetag: 13.10.2006
(51) Int. Cl.: B60K 15/035

(54) **Kraftstoffbehälter**
Fuel tank
Réservoir de combustible

(30) Priorität: 28.10.2005 DE 102005052072
(43) Veröffentlichungstag der Anmeldung: 02.05.2007
(73) Patentinhaber: Kautex Textron GmbH & Co. KG., 53229 Bonn (DE)
(72) Erfinder: Gebert, Klaus, 47877 Willich (DE)
(74) Vertreter: Kierdorf, Theodor

(56) Entgegenhaltungen:
- EP-A- 1 136 299
- DE-A1- 1 904 501
- DE-A1- 4 100 388
- US-A- 2 548 734
- US-A- 5 769 057

## Beschreibung

Die Erfindung betrifft einen Kraftstoffbehälter für ein KFZ mit wenigstens einer Einfüllöffnung und wenigstens einer Betankungsentlüftungsleitung.

Betankungsentlüftungsleitungen von Kraftstoffbehältern für KFZ sind häufig etwa parallel zum Einfüllrohr des Kraftstoffbehälters geführt. Diese münden bei einigen Kraftstoffbehältern in das einfüllseitige Ende des Einfüllrohres, wobei die bei der Betankung aus dem Behältervolumen verdrängten Gase an der Zapfpistole während des Betankungsvorgangs abgesaugt werden (Europäisches System).

Abgesehen von den vorgegebenen Anschlusspunkten der Entlüftungsleitung an dem Kraftstoffbehälter ist auch der Verlauf der Entlüftungsleitung oft durch die konstruktiven Gegebenheiten des KFZ in der Einbaulage des Behälters nicht frei wählbar. Vielmehr kommt es häufig dazu, dass wegen der an dem Fahrzeug vorhandenen Längsträger eine stetig steigende Anordnung der Entlüftungsleitung nicht möglich ist. Häufig hat die Entlüftungsleitung dann einen so gekrümmten Verlauf, dass sich in der Leitung ein Siphon bildet, d. h. ein Leitungsabschnitt so umgelenkt ist, dass sich im Umlenkbereich flüssige Kohlenwasserstoffe sammeln können, die zu einem zeitweisen Verschluss der Betankungsentlüftungsleitung führen. Dies führt bei der Betankung zu vorzeitiger Abschaltung des Zapfventils an der Zapfpistole und zu einer Unterbrechung des Betankungsvorgangs.

Um solche Störungen beim Betankungsvorgang zu verhindern, ist es bekannt, den Leitungsquerschnitt so groß zu wählen, dass gasförmige Kohlenwasserstoffe bei der Betankung durch den in der Entlüftungsleitung stehenden Kraftstoff hindurchtreten können, wobei die im Siphon befindliche Kraftstoffmenge durch den größeren Leitungsquerschnitt zu einem nur verhältnismäßig geringen Druckanstieg im Kraftstoffbehälter führt, so dass ein vorzeitiges Ansprechen des Zapfventils an der Zapfpistole verhindert wird. Eine solche Lösung ist aus wirtschaftlichen Gründen nur dann sinnvoll, wenn der Kraftstoffbehälter mit dem Einfüllrohr und der Betankungsentlüftungsleitung einstückig in einem Arbeitsgang und in einem Werkzeug aus Kunststoff hergestellt werden, beispielsweise durch Extrusionsblasformen.

Zur Vermeidung der zuvor geschilderten Nachteile ist es ebenfalls bekannt, in der Betankungsentlüftungsleitung eine nur abschnittsweise flaschenförmige Querschnittserweiterung vorzusehen. Dies ist einerseits wirtschaftlich nicht immer sinnvoll, andererseits beansprucht die Querschnittserweiterung zusätzliches Volumen, das je nach Einbausituation des Kraftstoffbehälters nicht vorhanden sein könnte.

Aus der DE 41 00 388 A1 die einen Kraftstoffbehälter nach dem Oberbegfiff des Anspruchs 1 offenbart, ist eine Entlüftungsleitung für einen von einer Wandung umschlossenen Tank für eine Flüssigkeit bekannt, umfassend eine die Wandung von außen durchdringende Leitung, die oberhalb der Flüssigkeit endet, wobei die Leitung mit einer in den Tank hineinragenden und relativ zu diesem beweglichen Verlängerung versehen ist und wobei die Verlängerung eine Mündung aufweist, die durch einen Schwimmkörper auf der Flüssigkeit abgestützt ist. Auf diese Art und Weise wird gewährleistet, dass sich die Mündung der in das Ausgleichsvolumen des Behälters hineinragende Leitung stets oberhalb des Flüssigkeitsspiegels befindet. Hierdurch wird das Eindringen von Flüssigkeitstropfen während der Befüllung des Tanks verhindert. Anstelle einer solchen Entlüftungsleitung können eine Vielzahl unabhängiger, lose gebündelter Schläuche vorgesehen sein. Diese können von kapillarartiger Enge und dementsprechend dünn ausgebildet sein.

Aus der EP 1 136 299 A2 ist bekannt, bei einer Entlüftungseinrichtung für einen Kraftstoffbehälter eine außerhalb des Kraftstoffbehälters befindliche Leitung einer Betriebsentlüftung innerhalb einer Leitung einer Betankungsentlüftung anzuordnen.

Aus der US 5,769,057 ist ein Kraftstoffbehälter mit einem Einfüllrohr und einem Entlüftungssystem bekannt, wobei das Entlüftungssystem ein Entlüftungsventil mit zwei durch eine Membrane getrennten Kammern aufweist und eine Kammer des Entlüftungsventils mit einer Signalleitung an dem oberen Teil des Einfüllrohrs angeschlossen ist. Durchmesser und Länge der Mündung der Signalleitung in das Einfüllrohr sind so bemessen, dass kein flüssiger Kraftstoff aus dem Einfüllrohr in die Signalleitung gelangen kann.

Der Erfindung liegt die Aufgabe zugrunde, einen Kraftstoffbehälter der eingangs genannten Art derart zu verbessern, dass eine Ansammlung von flüssigen Kohlenwasserstoffen in der Betankungsentlüftungsleitung mit verhältnismäßig einfachen Mitteln vermieden werden kann.

Die Aufgabe wird mit den Merkmalen des Anspruchs 1 gelöst, vorteilhafte Ausgestaltungen der Erfindung ergeben sich aus den Unteransprüchen.

Zweckmäßigerweise ist als kapillaraktives Element ein Docht vorgesehen. Dieser kann aus Baumwolle oder einer gegen Kohlenwasserstoffe beständigen Kunstfaser bestehen und gewoben, geflochten oder verdrillt sein.

Die tiefste Stelle des Siphons sollte sich deutlich oberhalb des maximalen Füllstandes des Behälters befinden, so dass ausgeschlossen ist, dass das kapillaraktive Element Kraftstoff von dem Behälter in den Siphon transportiert. In diesem Fall ist es unschädlich, wenn das erste Ende des kapillaraktiven Elements zeitweise in Kraftstoff getaucht ist. Ein Transport von Kraftstoff aus dem Behälter hinaus findet dann nur so lange statt, bis eine Sättigung des kapillaraktiven Elements mit Kraftstoff erreicht ist.

Vorzugsweise ist das erste Ende des Dochts beschwert. Die Beschwerung kann in Form eines Metallkörpers vorgesehen sein, der mit dem Ende des Dochts verbunden ist. Durch die Beschwerung ist sichergestellt, dass der Docht seine korrekte Lage in der Entlüftungsleitung behält. Insbesondere wird hierdurch gewährleistet, dass der Docht in gestreckter Lage verbleibt, so dass dieser den freien Querschnitt der Entlüftungsleitung nicht beeinträchtigt oder gar verschließt. Darüber hinaus dient die Beschwerung als Montagehilfe beim Einfädeln des Dochts in die Entlüftungsleitung. Insbesondere wenn die Betankungsentlüftungsleitung einstückig aus Kunststoff hergestellt wurde, ist es zweckmäßig, den Doch nach Fertigstellung der Entlüftungsleitung zu montieren. Dieses kann dann von einer Seite, beispielsweise mittels Druckluft, in die Entlüftungsleitung eingeschossen werden.

Zu diesem Zweck ist es vorteilhaft, wenn das zweite Ende des Dochts in der Entlüftungsleitung verankert ist.

Hierzu können an einem Ende des Dochts federelastische Halterarme vorgesehen sein, die das betreffende Ende durch Verkrallung in einem gewellten oder gerippten Abschnitt des Leitungsrohres bzw. der Entlüftungsleitung sichern. Beispielsweise kann hierzu ein Halteelement vorgesehen sein, das einen zylindrischen Grundkörper zur Aufnahme des Dochts aufweist. An dem zylindrischen Grundkörper können einstückig Haltearme angeformt sein, die sich in einem spitzen Winkel zu dem Grundkörper erstrecken und die in Einfädelrichtung des Dochts abgewickelt sind.

Die Erfindung wird nachstehend anhand eines in den Zeichnungen dargestellten Ausführungsbeispiels erläutert.

Es zeigen:

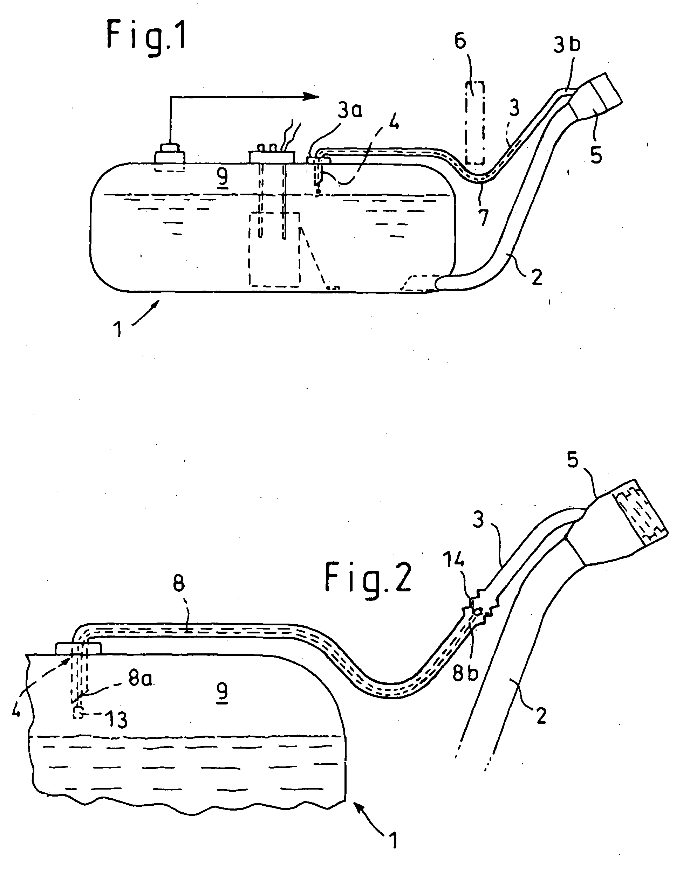

- Figur 1: eine schematische Ansicht des Kraftstoffbehälters gemäß der Erfindung,
- Figur 2: eine vergrößerte Detailansicht aus Figur 1,

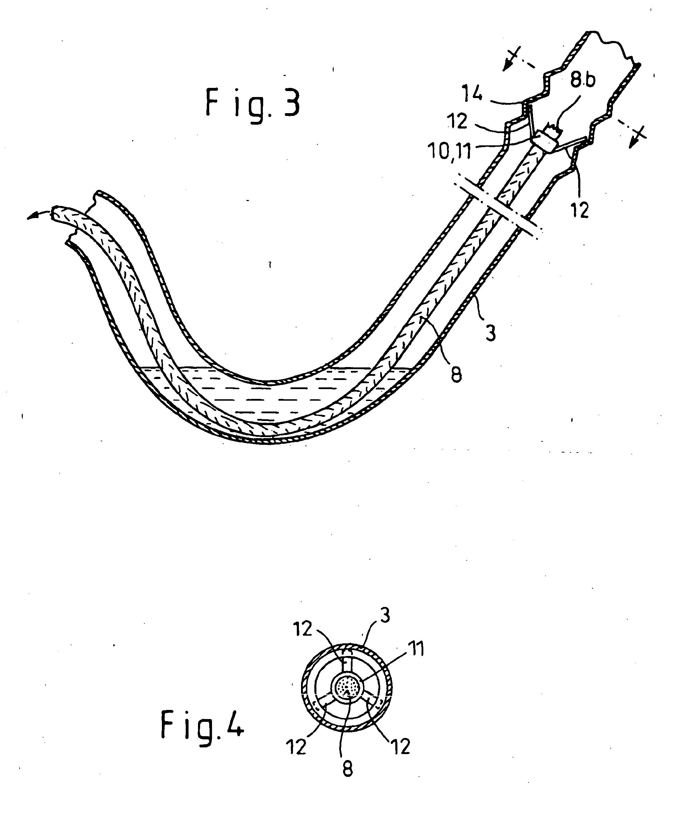

- Figur 3: eine vergrößerte Ansicht der in Figur 2 dargestellten Entlüftungsleitung, und
- Figur 4: einen Schnitt entlang der Linien IV-IV in Figur 3.

Der Kraftstoffbehälter 1 des in den Zeichnungen dargestellten Ausführungsbeispiels ist als Kunststoffkraftstoffbehälter mit einstückig angeformtem Einfüllrohr 2 und einer einstückig angeformten Betankungsentlüftungsleitung 3 ausgebildet. Die Betankungsentlüftungsleitung 3 ist an ihrem ersten Ende 3a an eine Entlüftungsöffnung 4 des Kraftstoffbehälters 1 angeschlossen, das zweite Ende 3b der Betankungsentlüftungsleitung mündet in ein Mundstück 5 des Einfüllrohrs 2, das der Aufnahme einer nicht dargestellten Zapfpistole dient. Mit 6 ist ein nur andeutungsweise dargestelltes Karosserieelement des KFZ bezeichnet, welches die Einbaulage des Kraftstoffbehälters 1 verdeutlicht. Wegen dieser Einbausituation des Kraftstoffbehälters 1 besitzt die Betankungsentlüftungsleitung 3 einen gekrümmten Verlauf und insbesondere etwa auf der Hälfte ihrer Länge eine knieähnliche Krümmung, die nachstehend der Einfachheit halber als Siphon 7 bezeichnet wird. Der Begriff Siphon wird im Folgenden für eine Leitungskrümmung verwendet, in welcher eine Flüssigkeitsansammlung stehen bleiben kann, die einen Gasdurchtritt durch die Leitung verhindert.

Bei der Betankung des KFZ verdrängt der durch das Einfüllrohr 2 in den Kraftstoffbehälter 1 einströmende Kraftstoff das über dem Kraftstoff stehende Gas, das durch die Entlüftungsöffnung 4 und die Betankungsentlüftungsleitung 3 in das Mundstück 5 des Einfüllrohrs 2 zurückgeführt wird und dort an der Zapfpistole bei der Betankung abgesaugt wird. Dabei ist es unvermeidlich, dass durch die Entlüftungsöffnung 4 des Kraftstoffbehälters 1 flüssige Kohlenwasserstoffe mitgerissen werden, die sich in dem Siphon 7 ansammeln. Auch sammelt sich dort in der Betankungsentlüftungsleitung 3 kondensierender Kraftstoff.

Damit ein Verschluss der Betankungsentlüftungsleitung 3 durch den flüssigen Kraftstoff vermieden wird, erstreckt sich innerhalb der Betankungsentlüftungsleitung 3 ein Docht 8 als kapillaraktives Element. Der Querschnitt des Dochtes 8 ist im Verhältnis zum Querschnitt der Betankungsentlüftungsleitung 3 so gewählt, dass eine Entlüftung nicht beeinträchtigt ist. Der Docht 8 besitzt ein erstes Ende 8a, das in das freie Ausgleichsvolumen 9 des Kraftstoffbehälters 1 hineinragt. Das zweite Ende 8b ist mit einem Halteelement 10 versehen, über welches der Docht 8 in der Betankungsentlüftungsleitung 3 verankert ist. Das Halteelement 10 umfasst einen Haltering 11, durch den das zweite Ende 8b des Dochtes 8 hindurchgeführt ist. An dem Haltering 11 sind drei Federarme 12 einstückig angeformt. Die Federarme 12 sind in Richtung auf das zweite Ende 8b des Dochtes 8 geneigt und bilden in Bezug auf die Längsachse des Dochtes 8 einen spitzen Winkel.

Bei der Montage des Dochtes 8 wurde dieser mittels Druckluft von der Seite des Mundstücks 5 aus in die Betankungsentlüftungsleitung 3 eingeschossen.

An dem führenden ersten Ende 8a des Dochtes 8 ist hierzu ein Gewicht 13 angehängt, das den Docht 8 in der Endlage strafft. Das nachlaufende zweite Ende 8b ist mit dem Haltelement 10 in dem gewellten Bereich 14 der Betankungsentlüftungsleitung 3 verankert, wobei die Federarme 12 des Halteelements 10 gegen Wellen oder Rippen des Einfüllrohrs 2 ausgestellt sind, so dass sich das Halteelement 10 dort verspannt.

### Bezugszeichenliste:

- 1: Kraftstoffbehälter
- 2: Einfüllrohr
- 3: Betankungsentlüftungsleitung
- 3a: erstes Ende der Betankungsentlüftungsleitung
- 3b: zweites Ende der Betankungsentlüftungsleitung
- 4: Entlüftungsöffnung des Kraftstoffbehälters
- 5: Mundstück
- 6: Karosserieelement
- 7: Siphon
- 8: Docht
- 8a: erstes Ende des Dochts
- 8b: zweites Ende des Dochts
- 9: Ausgleichsvolumen des Kraftstoffbehälters
- 10: Halteelement
- 11: Haltering
- 12: Federarme
- 13: Gewicht
- 14: gewellter Bereich des Einfüllrohrs

## Patentansprüche

1. Kraftstoffbehälter (1) für ein Kfz mit wenigstens einer Einfüllöffnung und wenigstens einer Betankungsentlüftungsleitung (3), wobei sich in der Betankungsentlüftungsleitung (3) über wenigstens eine Teillänge derselben wenigstens ein kapillaraktives Element erstreckt, wobei das kapillaraktive Element ein erstes und ein zweites Ende (8a, 8b) aufweist und das erste Ende (8a) sich in das freie Ausgleichsvolumen (9) des Kraftstoffbehälters (1) erstreckt, **dadurch gekennzeichnet, dass** sich die Entlüftungsleitung über wenigstens eine Teillänge etwa parallel zu dem Einfüllrohr (2) des Kraftstoffbehälters (1) erstreckt und wenigstens einen gekrümmten Leitungsabschnitt aufweist, der einen Siphon (7) bildet, und dass das kapillaraktive Element sich mit seinem zweiten Ende (8b) wenigstens bis zur tiefsten Stelle des Siphons (7) erstreckt, derart, dass mittels des kapillaraktiven Elements sich in dem Siphon sammelnder Kraftstoff in den Kraftstoffbehälter (1) zurückleitbar ist.

2. Kraftstoffbehälter nach Anspruch 1, **dadurch gekennzeichnet, dass** das kapillaraktive Element als Docht (8) ausgebildet ist.

3. Kraftstoffbehälter nach einem der Ansprüche 1 oder 2, **dadurch gekennzeichnet, dass** das erste Ende (8a) des kapillaraktiven Elements beschwert ist.

4. Kraftstoffbehälter nach einem der Ansprüche 1 bis 3, **dadurch gekennzeichnet, dass** das zweite Ende (8b) des kapillaraktiven Elements in der Betankungsentlüftungsleitung (3) festgelegt ist.

5. Kraftstoffbehälter nach Anspruch 4, **dadurch gekennzeichnet, dass** das zweite Ende (8b) ein Halteelement (10) mit federelastischen Halterarmen aufweist, die das betreffende Ende (8b) durch Verkrallung in einem gewellten oder gerippten Abschnitt der Betankungsentlüftungsleitung (3) sichern.

## Claims

1. Fuel tank (1) for a motor vehicle, having at least one filling opening and at least one refuelling vent line (3), at least one capillary-active element extending in the refuelling vent line (3) over at least a partial length thereof, the capillary-active element having a first and a second end (8a, 8b) and the first end (8a) extending into the free expansion volume (9) of the fuel tank (1), **characterised in that** the vent line extends over at least a partial length approximately parallel to the filler pipe (2) of the fuel tank (1) and has at least one curved line section forming a trap (7), and **in that** the capillary-active element extends with its second end (8b) at least as far as the deepest point of the trap (7), such that fuel collecting in the trap can be led back into the fuel tank (1) by means of the capillary-active element.

2. Fuel tank according to Claim 1, **characterised in that** the capillary-active element is in the form of a wick (8).

3. Fuel tank according to one of Claims 1 and 2, **characterised in that** the first end (8a) of the capillary-active element is weighted.

4. Fuel tank according to one of Claims 1 to 3, **characterised in that** the second end (8b) of the capillary-active element is fixed in the refuelling vent line (3).

5. Fuel tank according to Claim 4, **characterised in that** the second end (8b) has a holding element (10) with resilient holding arms which secure the end (8b) in question by catching in a corrugated or ribbed section of the refuelling vent line (3).

## Revendications

1. Réservoir de carburant (1) pour un véhicule automobile avec au moins une ouverture de remplissage et au moins une conduite de purge d'air de ravitaillement (3), dans lequel au moins un élément tensioactif s'étend dans la conduite de purge d'air de ravitaillement (3) sur au moins une longueur partielle de celle-ci, l'élément tensioactif présente une première et une seconde extrémités (8a, 8b) et la première extrémité (8a) s'étend dans le volume de compensation (9) libre du réservoir de carburant (1), **caractérisé en ce que** la conduite de purge d'air s'étend sur au moins une longueur partielle à peu près parallèlement au tube de remplissage (2) du réservoir de carburant (1) et présente au moins un tronçon de conduite courbé qui forme un siphon (7) et **en ce que** l'élément tensioactif s'étend avec sa seconde extrémité (8b) au moins jusqu'à l'endroit le plus profond du siphon (7) de sorte qu'au moyen de l'élément tensioactif, du carburant s'accumulant dans le siphon puisse être reconduit dans le réservoir de carburant (1).

2. Réservoir de carburant selon la revendication 1, **caractérisé en ce que** l'élément tensioactif est réalisé comme une mèche (8).

3. Réservoir de carburant selon l'une quelconque des revendications 1 ou 2, **caractérisé en ce que** la première extrémité (8a) de l'élément tensioactif est chargée.

4. Réservoir de carburant selon l'une quelconque des revendications 1 à 3, **caractérisé en ce que** la seconde extrémité (8b) de l'élément tensioactif est fixée dans la conduite de purge d'air de ravitaillement (3).

5. Réservoir de carburant selon la revendication 4, **caractérisé en ce que** la seconde extrémité (8b) présente un élément de retenue (10) avec des bras de support à élasticité de ressort qui bloquent l'extrémité (8b) concernée par cramponnage dans un tronçon ondulé ou nervuré de la conduite de purge d'air de ravitaillement (3).
